# EUROPEAN PATENT SPECIFICATION

(11) **EP 3 120 113 B1**
(45) Date of publication and mention of the grant of the patent: **31.07.2019**
(21) Application number: 15713660.7
(22) Date of filing: 13.03.2015
(51) Int. Cl.: G01D 5/20

(54) **POSITION SENSING APPARATUS**
POSITIONSSENSOR
APPAREIL DE DÉTECTION DE POSITION

(30) Priority: 17.03.2014 GB 201404688
(43) Date of publication of application: 25.01.2017
(73) Proprietor: TT Electronics Technology Limited, Cambridge CB22 5GG (GB); AB Elektronik GmbH, 59368 Werne (DE)
(72) Inventor: SMITH, Paul, Cambridge Cambridgeshire CB22 5GG (GB); GALLARDO, Diego, Cambridge Cambridgeshire CB22 5GG (GB); BIGGS, Tim, Cambridge Cambridgeshire CB22 5GG (GB); WITTS, David, Cambridge Cambridgeshire CB22 5GG (GB); RÜHL, Stefan, 59368 Werne (DE)
(74) Representative: EIP
(86) International application number: PCT/EP2015/055370
(87) International publication number: WO 2015/140080

(56) References cited:
- WO-A1-2008/032008
- WO-A2-2005/085763
- FR-A1- 2 860 070
- US-B1- 6 605 939

## Description

This invention relates to position sensing, and more particularly inductive sensing of the relative position between two members, and apparatus therefor.

Various forms of inductive sensor are known. Typically, but not exclusively, one member carries a transmit aerial and a receive aerial while the other member carries an intermediate coupling element. The transmit aerial and the receive aerial are arranged so that, in the absence of the intermediate coupling element, a magnetic field generated by alternating current flowing through the transmit aerial induces a null signal in the receive aerial (the transmit aerial and the receive aerial are then referred to as balanced). However, in the presence of the intermediate coupling element, a magnetic field generated by alternating current flowing through the transmit aerial induces an electromotive force in the receive aerial that generates a current that is dependent on the position of the intermediate coupling element relative to the transmit and receive aerials. By analysing this current, the relative position of the two members can be determined.

The alternating magnetic fields generated by such inductive sensors cannot pass through metallic walls, and accordingly such inductive sensors cannot be used if a metallic wall is positioned between the two members. To address this, various arrangements have been proposed that utilise a film of magnetisable material provided over the transmit aerial and the receive aerial. For example, International patent publication WO 2005/085763 discusses an arrangement in which a permanent magnet generates a DC magnetic field that can pass through a metallic wall and saturate a localised region of the magnetisable film. In the absence of the permanent magnet, the transmit aerial and the receive aerial are balanced so that alternating current flowing through the transmit aerial induces a null signal in the receive aerial. However, in the presence of the permanent magnet, alternating current flowing through the transmit aerial induces a signal in the receive aerial dependent on the position of the saturated region of the magnetisable film, and hence the position of the permanent magnet, so that the relative position of the two members can be determined by analysing the induced signal.

Another type of inductive sensor that utilises localised saturation of a magnetisable material by a permanent magnet is discussed in US 2001/0052771. In particular, a flat coil is formed on a substrate in a triangular shape, and a layer of magnetisable material is formed over the flat coil. The result of localised saturation of the magnetisable material by a permanent magnet is a change in the effective inductance of the flat coil, with the change in inductance being dependent on the position of the localised saturation. By measuring the inductance of the flat coil, or a value indicative thereof, the position of the permanent magnet is sensed.

A further type of inductive sensor that utilises localised saturation of magnetisable material is discussed in US 4774465. An elongate strip of magnetisable material is deposited on a carrier, and an excitation coil is positioned at each end of the elongate strip. A secondary coil is wrapped around the carrier between the two excitation coils. A permanent magnet saturates a localised region of the elongate strip of magnetisable material, creating a virtual air gap at which magnetic flux generated by the two excitation coils can escape the magnetisable material. A signal is induced in the secondary coil dependent on the position of the localised saturated region of the elongate magnetisable material, and accordingly the signal induced in the secondary coil can be processed to determine the position of the permanent magnet.

A problem with existing inductive sensors that utilise magnetisable material is that the magnetisable material can be saturated by an external magnetic field (i.e. a magnetic field other than that generated by the permanent magnet or that generated by a transmit aerial forming part of the inductive sensor). This is particularly the case where the length of the film of magnetisable material along a measurement direction is much larger than the width of the film of magnetisable material. Such saturation by external magnetic fields can introduce inaccuracy into position readings, and in the worse case can prevent any position reading at all being obtained.

One way of addressing this problem is to increase the thickness of the magnetisable material. For example, the inductive position sensor discussed in US 4774465 can be modified by replacing the carrier having the strip of magnetisable material formed thereon with an elongate core of magnetisable material. Such a modification requires, however, the use of a more powerful permanent magnet in the inductive sensor.

Another way to address this problem is by using shielding, that is providing an external path that is attractive to the flux of external magnetic fields but does not significantly affect the magnetic flux generated by the transmit aerial or the permanent magnet. Shielding is not, however, a possibility for all configurations of inductive sensors that utilise magnetisable material. For example, shielding is not always possible for the arrangement described in WO 2005/085763. In other configurations, the use of shielding is difficult due to a lack of available space or is impracticable due to cost considerations. Further inductive sensors that use localised saturation of magnetisable material are shown in US 6605939 and FR 2860070.

An object of the present invention is to provide an alternative technique for addressing the problem of the film of magnetisable material being saturated by external magnetic fields.

Aspects of the present invention are set out in the accompanying claims.

By using an extent of magnetisable material having a property that is non-uniform in such a manner that the effective reluctance of the extent of magnetisable material is increased in at least one direction, less flux from external magnetic fields is concentrated in the film of magnetisable material.

Optionally, an extent of conductive material is provided adjacent the magnetisable material. The conductive material provides paths for eddy currents to increase signal level.

Various embodiments of the invention will now be explained by way of example with reference to the following figures in which:
Figure 1 is a schematic view of a piston-and-cylinder assembly incorporating a position sensor according to the present invention;
Figure 2 schematically shows components of the piston-and-cylinder assembly of Figure 1 associated with the position sensor;
Figure 3 is an exploded view of a planar structure illustrated in Figure 2;
Figures 4A to 4F show different possible patterning of a magnetisable film forming part of the planar structure illustrated in Figure 3; and
Figures 5A to 5C show exploded views of position sensors with different orientations of the permanent magnet forming part of the position sensor with respect to the planar structure.

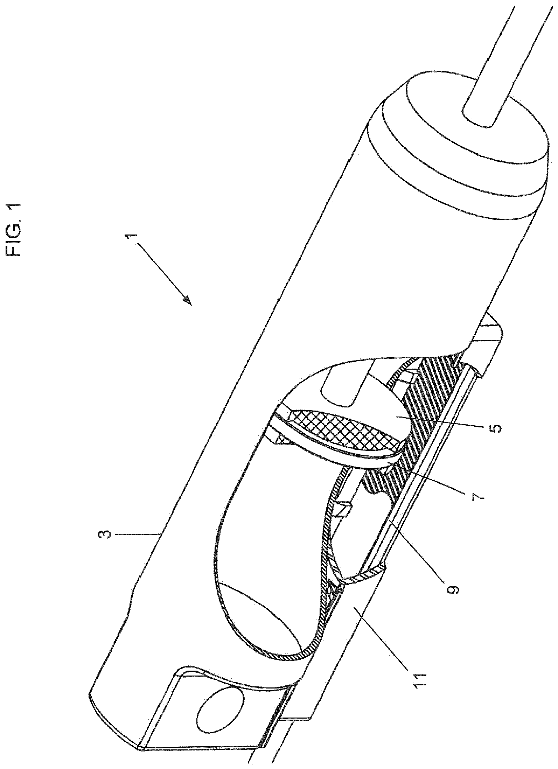

An embodiment of the present invention will now be described with reference to Figures 1 to 3. Figure 1 shows a piston-and-cylinder assembly 1 with a portion of the cylindrical casing 3 cut away to reveal a piston head 5 that moves along the axis of a cylindrical casing 3. The cylindrical casing 3 is made from aluminium. A position sensor for detecting the position of the piston head 5 along the axis the cylindrical casing 3 includes a permanent magnet 7 forming part of the piston head 5 and a planar structure 9 located outside of the cylindrical casing 3 within a separate casing 11 (part of which is cut away in Figure 1 to reveal the planar structure 9). In Figure 1, part of the piston head 5 has also been cut away to indicate that the permanent magnet 7 has a generally annular shape.

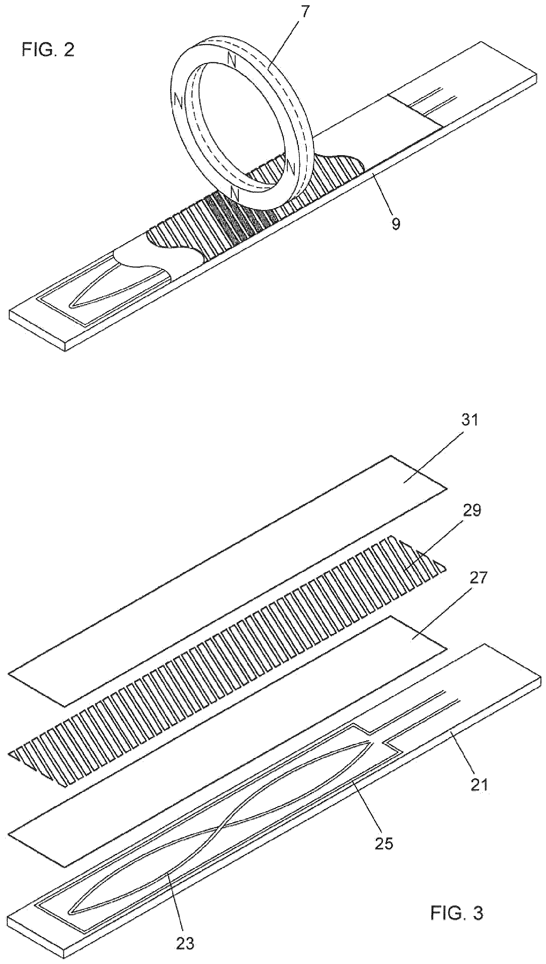

As schematically shown in Figure 2, the poles of the permanent magnet 7 are provided on opposing faces of the annulus such that the north pole faces one way along the axis of the cylindrical casing 3 and the south pole faces the other way along the axis of the cylindrical casing 3.

As can be seen best in the exploded view of Figure 3, the planar structure 9 has a printed circuit (PCB) 21 carrying conductive tracks forming a transmit aerial 23 and a receive aerial 25. In this embodiment, the transmit aerial 23 and the receive aerial 25 are the same as the corresponding structures described in International patent publication no. WO 03/038379 (the whole contents of which are hereby incorporated herein by reference). In addition, excitation signal generating and detection signal processing circuitry (not shown) identical to that described in WO 03/038379 applies excitation signals to the transmit aerial 23 and processes signals induced in the receive aerial 25 to determine a position reading.

A spacer layer 27 is formed over the transmit aerial 23 and the receive aerial 25. The spacer layer 27 is formed of an insulating material, in this embodiment a bonding tape such as 3M™ VHB™ tape. A patterned film 29 of magnetisable material is formed over the spacer layer 27. In this embodiment, the magnetisable material is a Nickel-Iron alloy commonly referred to as Mu-metal. Mu-metal has a high relative permeability (of the order of 100,000) and a low saturation flux density.

The high relative permeability of Mu-metal means that a continuous film of Mu-metal provides a low reluctance path for magnetic fields. However, as shown in Figure 3, in this embodiment the film 29 of Mu-metal is not continuous, but is instead patterned in order to reduce, in effect, the reluctance of the Mu-metal film along a path following the axis of the cylindrical casing 3. In particular, as shown in Figure 3, the Mu-metal film is formed by a linear array of strips arranged parallel to each other along the axis of the cylinder casing 3 and crossing the axis at an oblique angle, the strips being separated by gaps.

A layer 31 of conductive material is formed over the patterned Mu-metal film 29. In this embodiment, the conductive material is copper. The conductive layer 31 allows the flow of eddy currents that would otherwise be inhibited by the patterned Mu-metal film 29. In this way, the signal level in the receive aerial 25 is increased to a level comparable to that obtained using a continuous film of magnetisable material.

In the absence of the permanent magnet 7, the transmit aerial 23 and the receive aerial 25 are balanced such that a magnetic field generated by current flow in the transmit aerial 23 induces a nett null signal in the receive aerial 25. However, in the presence of the permanent magnet 7, the DC magnetic field generated by the permanent magnet 7 passes though the cylinder casing 3 and the casing 11 and saturates the adjacent region of the patterned Mu-metal film 29. The layout of the conductive tracks forming the transmit aerial 23 and the receive aerial 25 is such that this saturation causes an imbalance in the magnetic coupling between the transmit aerial 23 and the receive aerial 25 that is dependent on the position of the localised saturated region, and that imbalance causes a detection signal to be generated in the conductive track forming the receive aerial 25 that is indicative of the position of the permanent magnet 7 within the cylindrical casing 3. In particular, in this embodiment a detection signal is generated in the receive aerial 25 that has a phase that is indicative of the position of the permanent magnet 7, and accordingly the piston head 5, within the cylindrical casing 3. The excitation signal generating and detection signal processing circuitry, which as mentioned above is identical to that in WO 03/038379, processes detection signal induced in the receive aerial 25 to determine a position reading.

### MODIFICATIONS AND FURTHER EMBODIMENTS

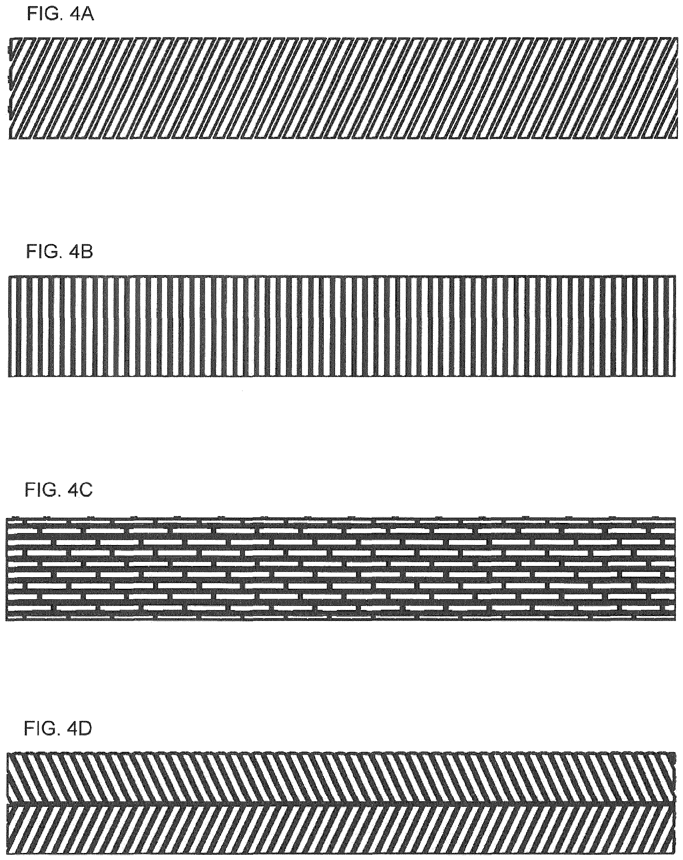

In the embodiment illustrated in Figures 2 and 3, the magnetisable film 29 is patterned into an array of diagonal stripes separated by gaps, as shown in Figure 4A. Figures 4B to 4F show, by way of example, alternative possible patterns for the magnetisable film 29. In particular:
Figure 4B shows a linear array of stripes aligned perpendicular to the axis of the cylindrical casing 3 and separated by gaps, which has been found to provide good DC immunity;
Figure 4C shows a brick pattern, in particular a stretcher bond pattern, in which the Mu-metal portions correspond to the stretchers of the bricks and gaps correspond to the mortar lattice;
Figure 4D shows a chevron pattern in which the two sides of a chevron are separated by a gap and the chevrons on one side are offset from the chevrons on the other side, which has been found to provide good signal level;

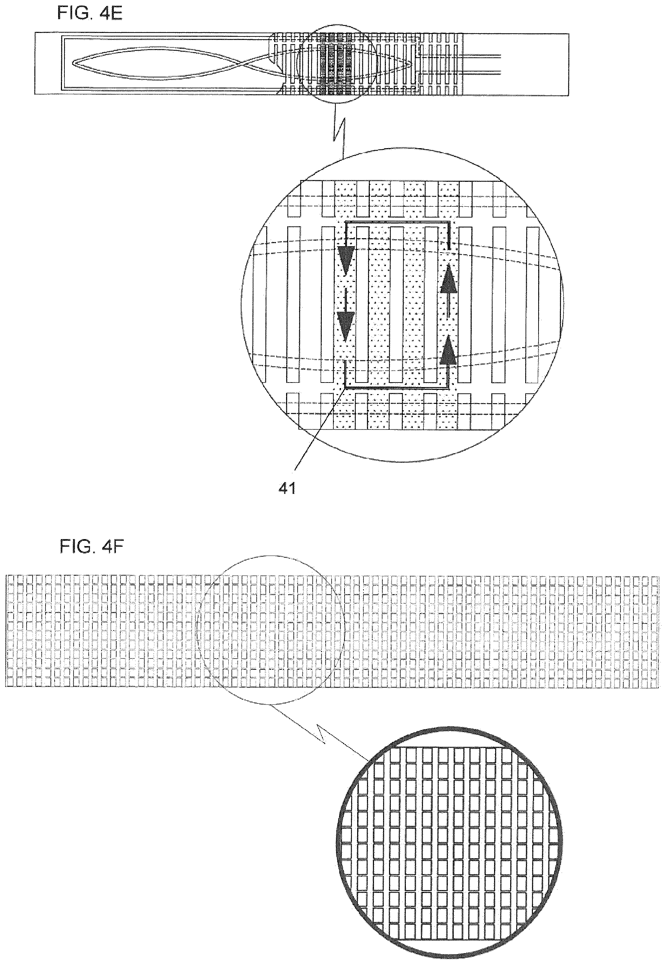

Figure 4E shows a linear array of stripes aligned perpendicular to the axis of the cylindrical casing with bridges provided between the stripes at two locations; and
Figure 4F shows a two-dimensional array of islands, with gaps provided between islands along the axis of the cylinder casing and perpendicular to the axis of the cylinder casing.

For the patterns shown in Figures 4A and 4B, the width of the stripes can be in the region of 3mm while the width of the gaps between stripes can be in the region of 0.2mm. These values are, however, given purely by way of example and many different dimensions can be used. For example, the strips could alternatively have a width in the range of 0.5mm to 1mm with gaps of about 20 microns provided therebetween.

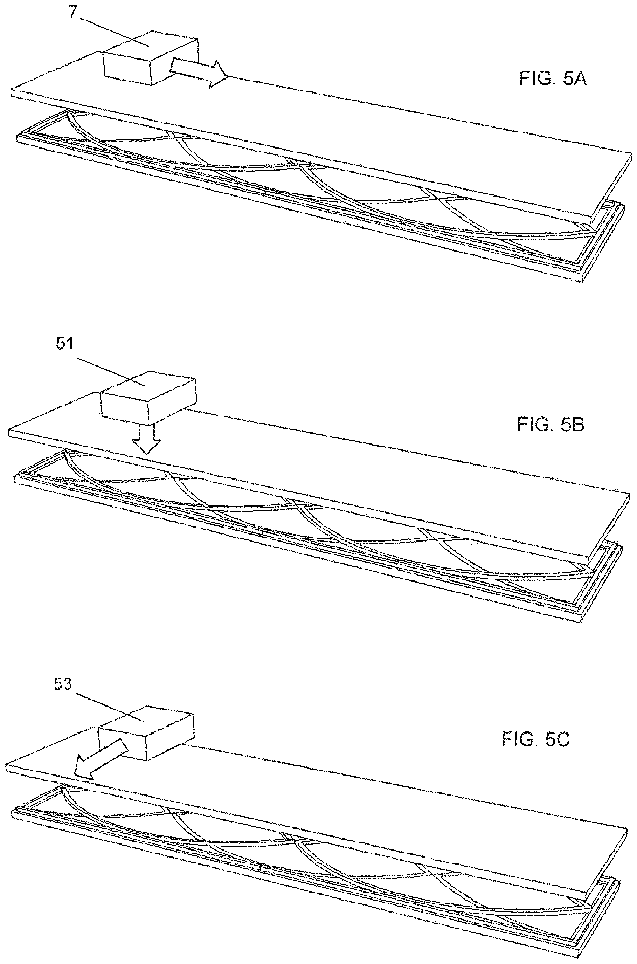

As schematically shown in Figure 5A, in the embodiment illustrated in Figures 2 and 3, the poles of the permanent magnet 7 are aligned along the axis of the cylindrical casing 3. For some applications in which the piston head 5 is rotatable about the axis, this configuration has the advantage that rotation of the piston head 5 about the axis will have no effect on the magnetic field generated by the permanent magnet 7. Other orientations of the poles of the permanent magnet 7 are, however, possible. As shown in Figure 5B, one pole of an alternative permanent magnet 51 could face toward the planar structure 9 while the other pole faces away from the planar structure 9. Alternatively, as shown in Figure 5C, one pole of another alternative permanent magnet 53 could face in a direction parallel to the planar structure 9 but perpendicular to the measurement direction while the other pole faces the opposite direction. In all three orientations of the magnet, a portion of the magnetisable film 29 adjacent to the magnet saturates, although the exact shape of the saturated region varies dependent on the orientation of the magnet and the patterning of the magnetisable film 29.

There are differences in performance depending on the chosen pattern of the magnetisable film 29 and the orientation of the permanent magnet. Some combinations of magnetisable film pattern and permanent magnet orientation can even result in reduced immunity to external magnetic fields, as segmenting manipulates the field direction of the magnetic field produced by the permanent magnet. For example, it has been found that the combination of the pattern of Figure 4A does not perform well with the permanent magnet orientation shown in Figure 5C.

Some general design principles have been discovered. For example, interconnecting regions of Mu-metal with small bridges can allow for specific eddy current paths which may assist with coupling with the receive aerial 25. Figure 4E shows an example of such a design, in which a portion of the pattern has been magnified with an eddy current path 41 within a saturated region (indicated by the dotted pattern) of the Mu-metal superimposed. The bridge portions of Mu-metal are sufficiently small to be magnetically insignificant. Further, providing bridges can provide greater mechanical stability that is useful during fabrication.

Good performance has been achieved by segmenting the Mu-metal as shown in Figure 4B with the permanent magnet oriented as shown in Figure 5C. In particular, with this arrangement DC immunity is greatly improved without significant disturbance of the magnetic flux of the permanent magnet 7.

Good performance has also been achieve by segmenting the Mu-metal as shown in Figure 4B with the permanent magnet oriented as shown in Figure 5A. Such an arrangement is rotationally variant. Although in this arrangement the segmenting of the Mu-metal does significantly affect signal level, improved performance over a continuous sheet of Mu-metal was achieved. In particular, it was found that with the permanent magnet 7 oriented as shown in Figure 5A, the magnetic flux of the permanent magnet 7 can cause unwanted localised saturation of a continuous sheet of Mu-metal away from the permanent magnet 7, whereas for a segmented sheet of Mu-metal as shown in Figure 4B such unwanted localised saturation can be avoided.

The size of the localised saturated region can be controlled by using isolated regions of Mu-metal, such as shown in Figure 4F. The controlling of the spot size may be particularly advantageous at the end regions of the sensor range in order to limit the impact of end effects. It has been found that the patterning illustrated in Figure 4F is well suited to the orientation of the permanent magnet 53 as illustrated in Figure 5C. In particular, segmenting the Mu-metal film along and perpendicular to the measurement direction, as shown in Figure 4F, has been found to provide a reduced spot size in comparison to segmenting the Mu-metal film only along the measurement direction, i.e. as shown in Figure 4B. In effect, providing the gaps in the Mu-metal film restricts the area of the localised saturated region.

In general, many different patterns could be employed. Such patterns may, for example, include hexagonal regions of Mu-metal or two shape patterns of Mu-metal. The shapes of the Mu-metal regions and the size of the gaps can allow control of magnetic flux in at least one direction, hence controlling the size and the shape of the saturation area. In an embodiment, the pattern of the extent of Mu-metal varies along the measurement direction to control the linearity of a position signal.

In the above embodiments, the film 29 of Mu-metal is patterned by forming uniform regions of Mu-metal separated by gaps. Other forms of patterning are available that improve the immunity of the position sensor to external magnetic fields. For example:
- the film of Mu-metal may have regions having a reduced saturation flux limit achieved, for example, by having a reduced thickness; or
- the film of Mu-metal may have regions of reduced permeability.

In general, a property of the Mu-metal film is non-uniform in order to increase the effective reluctance of the Mu-metal film in one or more directions in order to reduce the amount of flux of an external magnetic field channelled through the Mu-metal film in comparison with a uniform extent of Mu-metal, so as to improve the immunity of the position sensor to external magnetic fields. In general, a position sensor having a non-uniform Mu-metal film in accordance to the present invention can operate in the presence of external magnetic fields at least two times higher than a position sensor having a uniform Mu-metal film whose thickness matches the maximum thickness of the non-uniform Mu-metal film and whose permeability matched the maximum permeability of the non-uniform Mu-metal film.

The Mu-metal film can be made non-uniform in different ways. In order to fabricate a film of Mu-metal having reduced thickness, in one manufacturing method, a uniform film of Mu-metal is deposited and then etched away in accordance with a pattern to generate the non-uniform thickness. Alternatively, the uniform film of Mu-metal may be etched before being deposited. Alternatively, regions of Mu-metal can be cut away, either mechanically using, for example, a dicing saw or using a laser cutter.

In order to generate a film of Mu-metal having non-uniform relative permeability, in one manufacturing method, a uniform film of Mu-metal is mechanically worked to form a pattern of non-uniformity, for example by impressing a pattern in the Mu-metal film to form dented regions of Mu-metal or by inscribing a pattern in the uniform film of Mu-metal. Such inscribing may cause one or more of i) the thickness of the inscribed regions of Mu-metal being reduced, and ii) the permeability of the inscribed regions of Mu-metal being reduced. Such a process can result in the film of Mu-metal having a corrugated configuration. A film of Mu-metal having non-uniform relative permeability can also be generated by thermally working the Mu-metal in accordance with a pattern.

The effectiveness of different forms of non-uniformity in terms of one or both of providing immunity to external magnetic fields will be different. It has been found that generally, gaps within the Mu-metal are particular effective at providing immunity to external magnetic fields. For example, for a position sensor having a Mu-metal film of thickness 0.1mm, length 100mm and width 12 mm, position inaccuracies may occur with external magnetic fields along the length of the Mu-metal film even below 1mT (i.e. the position reading varies with the strength of the external magnetic field), while if the strength of the external magnetic field exceeds 15mT then the position signal can be lost completely. In contrast, by segmenting the Mu-metal film into 3mm stripes separated by 0.5mm gaps along the length of the position sensor, the accuracy of the position reading can be unaffected up to an external magnetic field strength in excess of 20mT.

As discussed above, there are different manufacturing processes associated with different forms of non-uniformity, and accordingly different manufacturing costs. In practice, the chosen form of non-uniformity will depend on achieving a desired level of performance at a desired cost.

In the above embodiments, a single Mu-metal film is formed to one side of the PCB 21. In alternative embodiments, two or more Mu-metal films are formed. For example, a Mu-metal film could be formed on each side of the PCB 21 or two Mu-metal films could be formed on the same side of the PCB 21 but separated by an insulating layer (such as a plastic material). The two layers of Mu-metal could have complementary patterns.

Bonding tape is provided as a spacer layer 27 between the Mu-metal film and the transmit and receive aerials in the above embodiments. There are alternative arrangements for providing a spacer layer. For example, PCB substrate material (e.g. FR4 glass epoxy) could be used.

In the above embodiments, the magnetisable material forming the patterned film is Mu-metal. Those skilled in the art will appreciate that various alternative magnetisable materials could be used, for example suitable nickel-iron alloys such as permalloy, silicon-iron alloys or cobalt-iron alloys. The magnetisable material can be in the form of an amorphous alloy, such as VITRO VAC™ available from Vacuumschmelze, or in the form of a nanocrystalline alloy, such as VITROPERM™ available from Vacuumschmelze.

Although the presence of the conductive layer 31 has been found to improve signal level, the conductive layer 31 is not necessary for the invention to function and is accordingly an optional feature. Also, the conductive layer 31 could be patterned in the same manner as the magnetisable material, while still providing eddy paths (see, for example, the pattern of Figure 4E) for simplicity of manufacturing.

In the embodiment described with reference to Figures 1 to 3, the position sensor is used to determine the position of a piston head 5 along a measurement path within a cylindrical casing 3. In such an arrangement, the piston head 5 forms a first member, the cylindrical casing 3 forms a second member, and the axis of the cylindrical casing 3 forms a measurement direction such that the position sensor detects the position of a first member relative to a second member along the measurement path. Position sensors implementing the present invention have, however, broader utility than just measuring the position of a piston head within a cylinder. Although the present invention is particularly useful when a property of the extent of magnetisable material is non-uniform along the measurement path, particularly when the measurement path is rectilinear as the problem of saturation by an external magnetic field is most prevalent for rectilinear strips of magnetisable material, that is not essential and some benefit may be obtained, for example, even in a rotary position sensor in which the measurement path is circular.

Typically, the non-uniformity is in a repeating pattern along at least one direction. For example, for a rectangular stripe of magnetisable material, a repeating pattern of non-uniformity may be present in one or both of the lengthwise and widthwise directions. It is preferred that the period of the repeating pattern is less than the spot size of the localised saturated region. However, a non-repeating pattern will work, for example a series of rectangular stripes of magnetisable material having a progressively larger length along the measurement direction.

The non-uniformity acts to reduce the distortion of an external magnetic field due to the presence of the extent of magnetisable material. It will be appreciated that this is significantly different from shielding, which is designed to suck in as much magnetic flux as possible of the external magnetic field.

In the above embodiments, reference has been made to a permanent magnet. While such a passive device has advantages, in some application the DC magnetic field may be generated by an electromagnet instead of a passive permanent magnet. In other words, what is required is a magnetic field generator either having a magnetic field or being operable to generate a magnetic field.

It will be appreciated by a person of ordinary skill in the art that the present invention is also applicable to the position sensors discussed in WO 2005/085763, US 2001/0052771 and US 4774465 (or other types of permanent magnet linear contactless displacement sensor (PLCD)). As such, having a transmit aerial and a receive aerial is not essential, although at least one conductive winding is required for which at least a component of a signal in the at least one conductive winding is dependent on the position of the localised saturated region of the magnetisable material. In particular, by virtue of the layout (whether two-dimensional or three-dimensional) of the at least one conductive winding, the component of the signal is dependent on the position of the localised saturated region of the magnetisable material. Further, the present invention would also apply to a position sensor having a core of magnetisable material instead of a film of magnetisable material formed on a substrate. What is required is an extent of magnetisable material of which a localised region is saturated by a magnetic field generator.

In general the extent of magnetisable material will have a profile along the measurement direction, with a property of that profile being non-uniform within a measurement range of operation so that the effective reluctance of the extent of magnetisable material is increased. This reduces the amount of the external magnetic field flux carried by the extent of magnetisable material, thereby improving the immunity of the position sensor to external magnetic fields.

In practice, it has been found that the type of non-uniformity impacts the performance in the presence of an external magnetic field. If the non-uniformity is formed by introducing gaps into the extent of magnetisable material, performance is greatly improved; both the accuracy of position readings and the ability to measure position at external field strengths for which an equivalent sensor with a uniform extent of magnetisable material would lose signal. Other nonuniformities may not produce such significant accuracy improvements, but still offer the ability to measure position at external field strengths for which an equivalent sensor with a uniform extent of magnetisable material would lose signal.

## Claims

1. A position sensor for determining the relative position between a first member (3) and a second member (5), the position sensor comprising:
a transmit aerial (23) and a receive aerial (25) fixed relative to the first member (3);
a magnetic field generator (7) fixed relative to the second member (5), the magnetic field generator (7) either having a magnetic field or being operable to generate a magnetic field; and
an extent of magnetisable material (29),
wherein the magnetic field associated with the magnetic field generator (7) is operable to saturate a localised region of the extent of magnetisable material, the position of the localised saturated region relative to the first member (3) being dependent on the position of the second member (5) relative to the first member (3), and the layout of the conductive tracks forming the transmit aerial (23) and the receive aerial (25) is such that this saturation causes an imbalance in the coupling between the transmit aerial and the receive aerial that is dependent on the position of the localised saturated region so as to introduce a position-dependent component to a signal in the receive aerial (25) in accordance with the position of the localised saturated region, and
wherein a property of the extent of magnetisable material (29) is non-uniform, whereby the effective reluctance of the extent of magnetisable material (29) is increased in at least one direction.

2. A position sensor according to claim 1, wherein the position sensor is arranged to determine the relative position between the first member (3) and the second member (5) along a measurement path, and wherein said property of the extent of magnetisable material (29) is non-uniform along the measurement path.

3. A position sensor according to claim 2, wherein the profile of the extent of magnetisable material (29) along the measurement path is non-uniform.

4. A position sensor according to any preceding claim, wherein said non-uniformity of the extent of magnetisable material (29) comprises gaps in the extent of magnetisable material.

5. A position sensor according to claim 4, wherein the extent of magnetisable material (29) extends a greater distance in a lengthwise direction than in a widthwise direction, and the gaps are arranged to increase the reluctance of the extent of magnetisable material (29) along the lengthwise direction.

6. A position sensor according to claim 4 or claim 5, wherein the extent of magnetisable material (29) comprises a layer of magnetisable material comprising an array of islands of magnetisable material, wherein at least some of the islands of magnetisable material are interconnected by bridging portions of magnetisable material.

7. A position sensor according to claim 6, wherein the bridging portions are arranged to provide circuital paths (41) for eddy currents.

8. A position sensor according to claim 6 or claim 7, wherein the islands of magnetisable material are in the form of:
a series of diagonal stripes relative to the lengthwise direction, said gaps being formed between adjacent diagonal stripes; or
a series of stripes in the widthwise direction, said gaps being formed between adjacent stripes; a series of chevrons, said gaps being formed between adjacent chevrons; or
a tessellated array of shapes, with said gaps being formed between the shapes.

9. A position sensor according to any of claims 6 to 8, wherein the magnetic field generator (7) has first and second poles aligned in a direction perpendicular to a direction of measurement of the position sensor and parallel to the layer of magnetisable material.

10. A position sensor according to any of any preceding claim, wherein said non-uniformity of the extent of magnetisable material (29) is arranged to define uniform regions of magnetisable material arranged so as to reduce the size of the localised saturated region in comparison with a whole extent of magnetisable material having said uniformity.

11. A position sensor according to any preceding claim, wherein said non-uniformity of the extent of magnetisable material (29) is in a repeating pattern along said at least one direction,
wherein the period of the repeating pattern in said at least one direction is smaller than the size of the localised saturated region.

12. A position sensor according to any preceding claim, wherein the non-uniformity of the extent of magnetisable material (29) inhibits the saturation of the extent of magnetisable material.

13. A position sensor according to any preceding claim, wherein the extent of magnetisable material (29) comprises a film of magnetisable material, and the position sensor further comprises a layer of conductive material provided with the film of magnetisable material.

14. A position sensor according to any preceding claim, wherein the non-uniformity varies along the measurement path to control the linearity of the position-dependent component with position.

## Patentansprüche

1. Positionssensor zum Bestimmen der relativen Position zwischen einem ersten Element (3) und einem zweiten Element (5), wobei der Positionssensor umfasst:
eine Sendeantenne (23) und eine Empfangsantenne (25), die relativ zum ersten Element (3) angeordnet sind;
einen Magnetfeldgenerator (7), der relativ zum zweiten Element (5) angeordnet ist, wobei der Magnetfeldgenerator (7) entweder ein Magnetfeld aufweist oder betreibbar ist, um ein Magnetfeld zu erzeugen; und
eine Ausdehnung eines magnetisierbaren Materials (29),
wobei das Magnetfeld, das mit dem Magnetfeldgenerator (7) assoziiert ist, betreibbar ist, um einen lokalisierten Bereich der Ausdehnung des magnetisierbaren Bereichs zu sättigen, wobei die Position des lokalisierten gesättigten Bereichs relativ zum ersten Element abhängig von der Position des zweiten Elements (5) relativ zum ersten Element (3) ist, und die Anordnung der Leiterbahnen, die die Sendeantenne (23) und die Empfangsantenne (25) bilden, so ist, dass diese Sättigung ein Ungleichgewicht in der Kopplung zwischen der Sendeantenne und der Empfangsantenne verursacht, die abhängig von der Position des lokalisierten gesättigten Bereichs ist, um eine positionsabhängige Komponente in ein Signal in die Empfangsantenne (25) einzubringen, das in Übereinstimmung mit der Position des lokalisierten gesättigten Bereichs ist, und
wobei eine Eigenschaft der Ausdehnung des magnetisierbaren Materials (29) ungleichförmig ist, wodurch die effektive Reluktanz der Ausdehnung des magnetisierbaren Materials (29) in zumindest einer Richtung erhöht wird.

2. Positionssensor nach Anspruch 1, wobei der Positionssensor eingerichtet ist, die relative Position zwischen dem ersten Element (3) und dem zweiten Element (5) entlang eines Messwegs zu bestimmen, und wobei die Eigenschaft der Ausdehnung des magnetisierbaren Materials (29) ungleichförmig entlang dem Messweg ist.

3. Positionssensor nach Anspruch 2, wobei das Profil der Ausdehnung des magnetisierbaren Materials (29) entlang dem Messweg ungleichförmig ist.

4. Positionssensor nach einem der vorhergehenden Ansprüche, wobei die Ungleichförmigkeit der Ausdehnung des magnetisierbaren Materials (29) Lücken in der Ausdehnung des magnetisierbaren Materials umfasst.

5. Positionssensor nach Anspruch 4, wobei die Ausdehnung des magnetisierbaren Materials (29) sich in einer größeren Distanz in einer Längsrichtung als in einer breiten Richtung erstreckt und die Lücken angeordnet sind, um die Reluktanz der Ausdehnung des magnetisierbaren Materials (29) entlang der Längsrichtung zu erhöhen.

6. Positionssensor nach Anspruch 4 oder 5, wobei die Ausdehnung des magnetisierbaren Materials (29) eine Schicht eines magnetisierbaren Materials umfasst, die eine Anordnung von Inseln aus magnetisierbarem Material umfasst, wobei zumindest einige der Inseln aus magnetisierbarem Material durch Brückenabschnitte von magnetisierbarem Material miteinander verbunden sind.

7. Positionssensor nach Anspruch 6, wobei die Brückenabschnitte angeordnet sind, um Leiterpfade (41) für Wirbelströme bereitzustellen.

8. Positionssensor nach Anspruch 6 oder 7, wobei die Inseln des magnetisierbaren Materials in der Form sind von:
einer Reihe von diagonalen Streifen relativ zur Längsrichtung, wobei die Lücken zwischen benachbarten diagonalen Streifen gebildet sind, oder
einer Reihe von Streifen in Breitenrichtung, wobei die Lücken zwischen benachbarten Streifen geformt sind; eine Reihe von Winkeln, wobei die Lücken zwischen benachbarten Winkeln gebildet sind; oder
eine mosaikartige Anordnung von Formen, wobei die Lücken zwischen den Formen gebildet sind.

9. Positionssensor nach einem der Ansprüche 6 bis 8, wobei der Magnetfeldgenerator (7) erste und zweite Pole aufweist, die in einer Richtung senkrecht zu einer Richtung der Messung des Positionssensors und parallel zur Schicht des magnetisierbaren Materials ausgerichtet sind.

10. Positionssensor nach einem oder mehreren der vorhergehenden Ansprüche, wobei die Ungleichförmigkeit der Ausdehnung des magnetisierbaren Materials (29) eingerichtet ist, um gleichförmige Bereiche des magnetisierbaren Materials zu definieren, die eingerichtet sind, um die Größe des lokalisierten gesättigten Bereichs im Vergleich mit einer gesamten Ausdehnung des magnetisierbaren Materials, die die Gleichförmigkeit aufweist, zu reduzieren.

11. Positionssensor nach einem der vorhergehenden Ansprüche, wobei die Ungleichförmigkeit der Ausdehnung des magnetisierbaren Materials (29) in einem wiederholenden Muster entlang der mindestens einen Richtung ist,
wobei die Periode des sich wiederholenden Musters in der mindestens einen Richtung geringer als die Größe des lokalisierten gesättigten Bereichs ist.

12. Positionssensor nach einem der vorhergehenden Ansprüche, wobei die Ungleichförmigkeit der Ausdehnung des magnetisierbaren Materials (29) die Sättigung der Ausdehnung des magnetisierbaren Materials hemmt.

13. Positionssensor nach einem der vorhergehenden Ansprüche, wobei die Ausdehnung des magnetisierbaren Materials (29) einen Film eines magnetisierbaren Materials umfasst, und der Positionssensor ferner eine Schicht aus leitfähigem Material umfasst, die in dem Film des magnetisierbaren Materials bereitgestellt ist.

14. Positionssensor nach einem der vorhergehenden Ansprüche, wobei die Ungleichförmigkeit entlang des Messwegs variiert, um die Linearität der positionsabhängigen Komponente in Position zu steuern.

## Revendications

1. Capteur de position permettant de déterminer la position relative entre un premier élément (3) et un second élément (5), le capteur de position comprenant :
une antenne d'émission (23) et une antenne de réception (25) fixes par rapport au premier élément (3) ;
un générateur de champ magnétique (7) fixe par rapport au second élément (5), le générateur de champ magnétique (7) ayant un champ magnétique ou étant apte à générer un champ magnétique ; et
une étendue de matériau magnétisable (29),
dans lequel le champ magnétique associé au générateur de champ magnétique (7) est apte à saturer une région localisée de l'étendue de matériau magnétisable, la position de la région saturée localisée par rapport au premier élément (3) étant fonction de la position du second élément (5) par rapport au premier élément (3), et la topologie des chemins conducteurs formant l'antenne d'émission (23) et l'antenne de réception (25) est telle que cette saturation provoque, dans le couplage entre l'antenne d'émission et l'antenne de réception, un déséquilibre qui est fonction de la position de la région saturée localisée, de manière à introduire une composante dépendant de la position dans un signal dans l'antenne de réception (25), en fonction de la position de la région saturée localisée, et
dans lequel une propriété de l'étendue de matériau magnétisable (29) est non uniforme, de sorte que la réluctance effective de l'étendue de matériau magnétisable (29) est accrue dans au moins une direction.

2. Capteur de position selon la revendication 1, où le capteur de position est agencé pour déterminer la position relative entre le premier élément (3) et le second élément (5) le long d'un trajet de mesure, et dans lequel ladite propriété de l'étendue de matériau magnétisable (29) est non uniforme le long du trajet de mesure.

3. Capteur de position selon la revendication 2, dans lequel le profil de l'étendue de matériau magnétisable (29) le long du trajet de mesure est non uniforme.

4. Capteur de position selon l'une quelconque des revendications précédentes, dans lequel ladite non-uniformité de l'étendue de matériau magnétisable (29) comprend des espaces dans l'étendue de matériau magnétisable.

5. Capteur de position selon la revendication 4, dans lequel l'étendue de matériau magnétisable (29) s'étend sur une plus grande distance dans la direction de la longueur que dans la direction de la largeur, et les espaces sont agencés pour accroître la réluctance de l'étendue de matériau magnétisable (29) le long de la direction de la longueur.

6. Capteur de position selon la revendication 4 ou la revendication 5, dans lequel l'étendue de matériau magnétisable (29) comprend une couche de matériau magnétisable comprenant un groupement d'îlots de matériau magnétisable, dans lequel au moins certains des îlots de matériau magnétisable sont reliés entre eux par des parties formant ponts de matériau magnétisable.

7. Capteur de position selon la revendication 6, dans lequel les parties formant ponts sont agencées pour créer des trajets de circuit (41) destinés à des courants de Foucault.

8. Capteur de position selon la revendication 6 ou la revendication 7, dans lequel les îlots de matériau magnétisable se présentent sous la forme de :
une série de bandes diagonales par rapport à la direction de la longueur, lesdits espaces étant formés entre des bandes diagonales adjacentes ; ou
une série de bandes dans la direction de la largeur, lesdits espaces étant formés entre des bandes adjacentes ; une série de chevrons, lesdits espaces étant formés entre des chevrons adjacents ; ou
un groupement en mosaïque de formes, lesdits espaces étant formés entre les formes.

9. Capteur de position selon l'une quelconque des revendications 6 à 8, dans lequel le générateur de champ magnétique (7) comporte des premier et second pôles alignés dans une direction perpendiculaire à une direction de mesure du capteur de position et parallèle à la couche de matériau magnétisable.

10. Capteur de position selon l'une quelconque des revendications précédentes, dans lequel ladite non-uniformité de l'étendue de matériau magnétisable (29) est conçue pour définir des régions uniformes de matériau magnétisable, agencées de manière à réduire la taille de la région saturée localisée par comparaison avec une étendue totale de matériau magnétisable possédant ladite uniformité.

11. Capteur de position selon l'une quelconque des revendications précédentes, dans lequel ladite non-uniformité de l'étendue de matériau magnétisable (29) se présente sous la forme d'un motif répétitif le long de ladite au moins une direction,
dans lequel la période du motif répétitif dans ladite au moins une direction est inférieure à la taille de la région saturée localisée.

12. Capteur de position selon l'une quelconque des revendications précédentes, dans lequel la non-uniformité de l'étendue de matériau magnétique (29) inhibe la saturation de l'étendue de matériau magnétisable.

13. Capteur de position selon l'une quelconque des revendications précédentes, dans lequel l'étendue de matériau magnétisable (29) comprend un film de matériau magnétisable, et le capteur de position comprend en outre une couche de matériau conducteur pourvue du film de matériau magnétisable.

14. Capteur de position selon l'une quelconque des revendications précédentes, dans lequel la non-uniformité varie le long du trajet de mesure pour maîtriser la linéarité de la composante dépendant de la position avec la position.
